# EUROPEAN PATENT SPECIFICATION

(11) **EP 3 324 226 B1**
(45) Date of publication and mention of the grant of the patent: **27.10.2021**
(21) Application number: 17186517.3
(22) Date of filing: 16.08.2017
(51) Int. Cl.: G02B 6/27, G02B 6/35

(54) **OPTICAL CROSS CONNECTION APPARATUS**
OPTISCHE QUERVERBINDUNGSVORRICHTUNG
APPAREIL D'INTERCONNEXION OPTIQUE

(30) Priority: 17.08.2016 CN 201610681086
(43) Date of publication of application: 23.05.2018
(73) Proprietor: HUAWEI TECHNOLOGIES CO., LTD., Shenzhen, Guangdong 518129 (CN)
(72) Inventor: DING, Bifeng, Shenzhen, Guangdong 518129 (CN); MAO, Chongchang, Shenzhen, Guangdong 518129 (CN); LI, Minchun, Shenzhen, Guangdong 518129 (CN)
(74) Representative: Pfenning, Meinig & Partner mbB

(56) References cited:
- EP-A2- 3 035 093
- WO-A1-99/55024
- WO-A1-2015/180380
- US-A- 4 461 543
- US-A1- 2001 016 096

## Description

### TECHNICAL FIELD

The present invention relates to the field of communications technologies, and in particular, to an optical cross connection apparatus.

### BACKGROUND

An optical cross connection (OXC) apparatus has at least two input ports and at least two output ports, and is configured to control an optical signal received at an optical network node by any of the input ports of the optical cross connection apparatus to be emitted from one of the output ports of the optical cross connection apparatus.

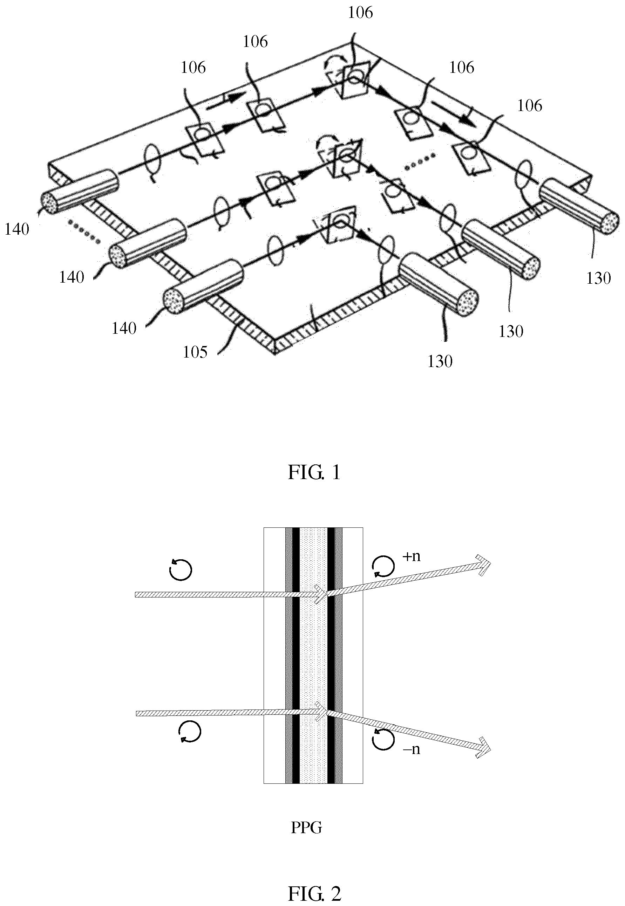

As shown in FIG. 1, FIG. 1 is a schematic structural diagram of an embodiment of an optical cross switch of a micro-electro-mechanical system (MEMS)-based OXC apparatus in the prior art. The schematic structural diagram is a two-dimensional schematic diagram. The optical cross switch in the figure includes a lens matrix, and a rotation angle of each lens 106 in the lens matrix is controlled by a MEMS 105. Any input port 140 of the optical cross connection apparatus is opposite to one row of lenses 106, and any output port 130 is opposite to one column of lenses 106. When light output from the i^{th} input port 140 needs to be output from the j^{th} output port 130, the rotation angle of each lens 106 in the lens matrix is controlled by the MEMS 105, so that the lens 106 of the i^{th} row and the j^{th} column in the lens matrix is rotated onto an optical path of a light beam output from the i^{th} output port 130, and other lenses of the i^{th} row and other lenses of the j^{th} column are rotated to deviate from the optical path. In this way, the lens of the i^{th} row and the j^{th} column reflects the light beam to the j^{th} output port 130. However, the optical cross switch imposes a relatively high requirement on accuracy of a rotation angle of a lens. As a result, the optical cross connection apparatus is relatively sensitive to vibration, and has relatively low long-term use reliability.

US 2001/0016096 A1 discloses a free space all-optical crossbar that switches light from a plurality of sources onto a plurality of receivers, in any arbitrary permutation or combination (including one-to-one and many-to-one permutations). The polarization of the light from each source is controlled by a series of polarization control devices associated with the source so as to obtain desired angular deflections through a series of polarization-dependent angular deflectors in a first deflection unit. A lens may then direct the light from each source towards its desired receiver. An optional second deflection unit containing polarization control devices associated with individual receivers redirects the light so that it is incident normally on the receivers.

WO 2015/180380 A1 discloses an adjustable optical attenuator, comprising a collimator, a variable polarization grating, a reflection mirror and a voltage controller for adjusting voltages across two ends of a liquid crystal layer of the variable polarization grating, wherein the collimator, the variable polarization grating and the reflection mirror are placed in sequence.

### SUMMARY

The present invention relates to an optical cross connection apparatus according to claim 1. The optical cross connection apparatus is less sensitive to vibration and has relatively high long-term use reliability. Different embodiments are set out in the dependent claims.

### BRIEF DESCRIPTION OF DRAWINGS

FIG. 1 is a schematic structural diagram of an embodiment of an optical cross switch of a MEMS-based OXC apparatus in the prior art;
FIG. 2 is a schematic diagram of a working principle of a polymer polarization grating;
FIG. 3 is a schematic structural diagram of an embodiment of an optical cross connection apparatus according to the present invention;
FIG. 4 is a schematic structural diagram of another embodiment of an optical cross connection apparatus according to the present invention;
FIG. 5 is a schematic structural diagram of another embodiment of an optical cross connection apparatus according to the present invention;
FIG. 6 is a schematic structural diagram of another embodiment of an optical cross connection apparatus according to the present invention;
FIG. 7 is a right view of a first switch matrix, a second switch matrix, and first to fourth optical fibers in the optical cross connection apparatus shown in FIG. 6;
FIG. 8 is a schematic structural diagram of another embodiment of an optical cross connection apparatus according to the present invention;
FIG. 9 is a schematic diagram of four optical paths that can be implemented after a light beam successively passes two switches;
Four diagrams in FIG. 10 are schematic diagrams of all optical paths that can be implemented after light beams output from four input ports pass through an optical cross connection apparatus respectively;
FIG. 11 is a schematic diagram of an optical path when a light beam passes through a switch including two PPGs and one liquid crystal;
FIG. 12 is a schematic structural diagram of another embodiment of an optical cross connection apparatus according to the present invention;
FIG. 13 is a schematic diagram of an optical path when a light beam passes through a switch including a liquid crystal, a PPG, and a reflecting member that are in parallel;
FIG. 14 is a schematic structural diagram of another embodiment of an optical cross connection apparatus according to the present invention;
The left figure in FIG. 15 is a left view of a light guide member 1003 in the embodiment shown in FIG. 14;
FIG. 16 is a schematic structural diagram of another embodiment of an optical cross connection apparatus according to the present invention;
FIG. 17 is a schematic structural diagram of another embodiment of an optical cross connection apparatus according to the present invention; and
FIG. 18 is a bottom view of input and output ports and first and second switch matrices in FIG. 17.

### DESCRIPTION OF EMBODIMENTS

For ease of understanding of the present invention, the following first describes terms mentioned in the present invention.

A liquid crystal (LC): When a first condition (for example, an input voltage is within a first preset range) is satisfied, the liquid crystal can change incident left-handed polarized light to right-handed polarized light for emission, and change incident right-handed polarized light to left-handed polarized light for emission; when a second condition (for example, an input voltage is within a second preset range) is satisfied, the liquid crystal does not change a polarization state of incident light and transmits the incident light directly.

Polymer polarization grating (PPG): As shown in FIG. 2, if a light beam incident to the PPG is left-handed polarized light, the light beam is adjusted to right-handed polarized light when being emitted from the PPG and diffracted to a +n order for emission; and if the light beam incident to the PPG is right-handed polarized light, the light beam is adjusted to left-handed polarized light when being emitted from the PPG and diffracted to a -n order for emission. When the light beam is diffracted to the +n order for emission, it is equivalent to that a propagation direction of a light beam emitted from the PPG after the light beam is incident to the PPG is deflected at an angle θ in a first preset direction (upward in FIG. 2). For convenience of description, a plane at which the light beam before being incident to the PPG and a deflected light beam are located is referred to as a deflection plane of the PPG. When the light beam is diffracted to the -n order for emission, it is equivalent to that a propagation direction of a light beam emitted from the PPG is deflected at an angle θ in a second preset direction (downward in FIG. 2).

a×b switches in a matrix arrangement are also referred to as a switch matrix, which refers to a×b switches in a matrix arrangement of a rows and b columns, and a switch (i, j) refers to a switch at the i^{th} row and the j^{th} column, where a, b, i, j are all positive integers.

For clear description, words "left", "right", "upper", "lower", "outer", and "inner", or the like that describe a position refer to a position in a figure, where "outer" refers to a direction that is perpendicular to a straight line on the paper and that is towards the outside of the paper, and "inner" refers to a direction that is perpendicular to a straight line of the paper and that is towards the inside of the paper.

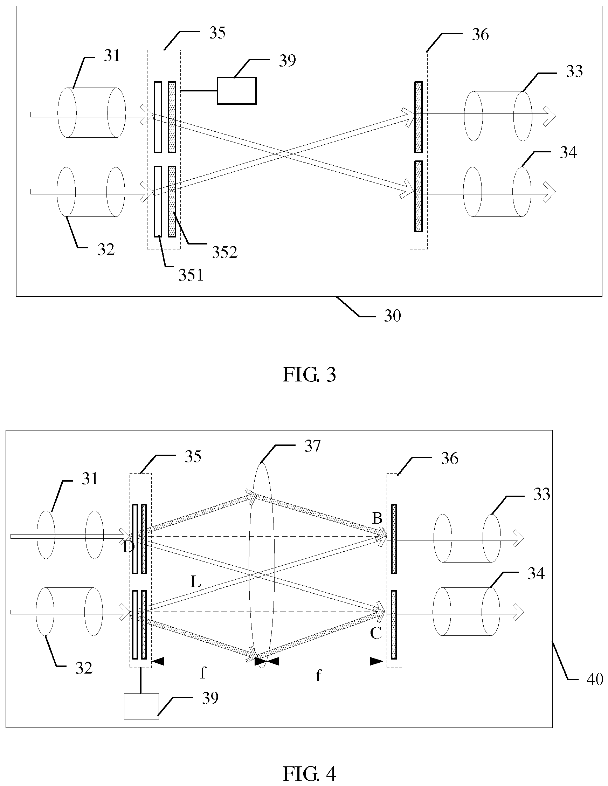

Referring to FIG. 3, FIG. 3 is a schematic structural diagram of an embodiment of an optical cross connection apparatus according to the present invention. An optical cross connection apparatus 30 includes a control apparatus 39, a first switch matrix 35, a second switch matrix 36, two input ports, and two output ports. Specifically, the two input ports are respectively ports that are of the first optical fiber 31 and the second optical fiber 32 in FIG. 3 and that are close to the first switch matrix 35, and the two output ports are respectively ports that are of the third optical fiber 33 and the fourth optical fiber 34 in FIG. 3 and that are close to the second switch matrix 36.

The first switch matrix includes 2×1 switches in a matrix arrangement, where the switch includes one PPG 352 and one liquid crystal 351, and the PPG 352 is configured to receive a light beam from the liquid crystal 351. The second switch matrix 36 includes 2×1 switches in a matrix arrangement, where the switch includes one PPG.

In this embodiment, a row of the first switch matrix is parallel to a row of the second switch matrix, a column of the first switch matrix is parallel to a column of the second switch matrix, and deflection planes of PPGs in the first switch matrix and the second switch matrix are all parallel to the rows and the columns. Specifically, all rows and columns in FIG. 3 are parallel to the paper. For clear description, in this specification, a row of a switch matrix refers to a line formed by connecting all dots of each row of the switch matrix when each switch in the switch matrix is represented by one dot. Similarly, a column of a switch matrix refers to a line formed by connecting all dots of each column.

A port of the first optical fiber 31 is corresponding to a switch (1, 1) in the first switch matrix 35, and is used to output a polarized light beam to the switch (1, 1). A port of the second optical fiber 32 is corresponding to a switch (2, 1) in the first switch matrix 35, and is used to output a circularly polarized light beam (which is specifically left-handed polarized light or right-handed polarized light) to the switch (2, 1). In actual application, light beams incident to the first optical fiber 31 and the second optical fiber 32 are not necessarily circularly polarized light, and therefore, optionally, a polarizer and a quarter-wave plate are further disposed at each input port of the optical cross connection apparatus in the present invention, where the quarter-wave plate is configured to receive a light beam from the polarizer, the polarizer is configured to change the incident light beam to linearly polarized light in a preset direction, and the quarter-wave plate is configured to change the incident linearly polarized light to circularly polarized light in a preset direction.

A port of the third optical fiber 33 is corresponding to a switch (1, 1) in the second switch matrix 36, and is used to receive a light beam from the switch (1, 1). A port of the fourth optical fiber 34 is corresponding to a switch (2, 1) of the second switch matrix 36, and is used to receive a polarized light beam from the switch (2, 1).

The control apparatus 39 is configured to adjust switches in the first switch matrix 35 and the second switch matrix 36, to make the optical cross connection apparatus 30 be in a first state or a second state, where the first state means that a light beam from the first optical fiber 31 is emitted from the fourth optical fiber 34, and a light beam from the second optical fiber 32 is emitted from the third optical fiber 33; and the second state means that a light beam from the first optical fiber 31 is emitted from the third optical fiber 33, and a light beam from the second optical fiber 32 is emitted from the fourth optical fiber 34.

FIG. 3 shows a schematic diagram of an optical path when the optical cross connection apparatus 30 is in the first state. Specifically, that the control apparatus adjusts the switches in the first switch matrix and the second switch matrix to make the optical cross connection apparatus 30 be in the first state is described in the following process:

In the first switch matrix, a liquid crystal in the switch (1, 1) receives a first light beam whose polarization state is a left-handed polarization state and that is emitted by the first optical fiber 31, and the control apparatus 39 makes the liquid crystal satisfy the second condition, so that the first light beam is changed to right-handed polarized light and is emitted to a PPG. Alternatively, the liquid crystal receives a first light beam whose polarization state is a right-handed polarization state and that is emitted by the first optical fiber 31, and the control apparatus 39 makes the liquid crystal satisfy the first condition, so that the liquid crystal does not change the polarization state of the first light beam, but directly transmits the first light beam to the PPG. Similarly, a switch (2, 1) receives a second light beam emitted by the second optical fiber 32, and the control apparatus 39 controls a liquid crystal in the switch (2, 1), so that the second light beam is incident to a PPG in the switch (2, 1) in a left-handed polarization state.

In another possible implementation of the present invention, if it is determined that a polarization state of a first light beam received by the optical cross connection apparatus is a right-handed polarization state, and a polarization state of a second light beam received by the optical cross connection apparatus is a left-handed polarization state, a liquid crystal in the switch (1, 1) and a liquid crystal in the switch (2, 1) can be omitted.

In this embodiment, in the first switch matrix 35, the PPG in the switch (1, 1) receives a vertically incident light beam in a right-handed polarization state, changes the light beam to be in a left-handed polarization state, and makes the light beam deflected downward at an angle θ for emission. The PPG in the switch (2, 1) receives a vertically incident light beam in a left-handed polarization state, changes the light beam to be in a right-handed polarization state, and makes the light beam deflected upward at the angle θ for emission. Optionally, the PPGs in the switch (1, 1) and the switch (2, 1) may also be combined into one PPG. This is not limited herein.

In the second switch matrix 36, the PPG in the switch (2, 1) is configured to receive a light beam that is left-handed polarized light and that is incident at the angle θ, change the light beam to right-handed polarized light, and make the light beam deflected upward at the angle θ for emission and be incident to the fourth optical fiber 34 at a preset angle (which is specifically 90 degrees in this embodiment). The PPG in the switch (1, 1) receives a light beam that is right-handed polarized light and that is incident at the angle θ, changes the light beam to left-handed polarized light, and make the light beam deflected downward at the angle θ for emission and be incident to the third optical fiber 33 at a preset angle (which is specifically 90 degrees in this embodiment). Optionally, the PPGs in the switch (1, 1) and the switch (2, 1) may also be combined into one PPG. This is not limited herein.

In this embodiment, each switch in the first switch matrix 35 and the second switch matrix 36 is further provided with a transmission region, and a propagation direction and a polarization state of a light beam are not changed when the light beam passes through the transmission region. The transmission region may be a through hole disposed in a switch, or a light-transmitting sheet disposed on a through hole in a switch. This is not limited herein. Specifically, for example, if a switch includes one LC and one PPG, both the LC and the PPG are provided with one through hole, and the through holes on the LC and on the PPG are opposite to each other and form a transmission region on the switch together.

Specifically, that the control apparatus adjusts the switches in the first switch matrix and the second switch matrix to make the optical cross connection apparatus 30 be in the second state is described in the following process:

The control apparatus 39 is configured to move the first switch matrix and the second switch matrix, so that a transmission region in each switch in the first switch matrix is located on an optical path of a corresponding light beam. In this way, each switch in the first switch matrix transmits an incident light beam to the second switch matrix. A transmission region in each switch in the second switch matrix is located on an optical path of an incident light beam, so that each switch in the second switch matrix transmits the incident light beam, and makes the incident light beam be incident to a corresponding optical fiber at a preset angle (which is specifically 90 degrees in this embodiment) for emission.

It should be noted that the preset angle in this specification may be a specific angle, or may be any angle within a preset range. This is not limited herein.

Optionally, in this embodiment, an input port and an output port in the optical cross connection apparatus may not be ports of an optical fiber, but other ports that can relay an optical element of a light beam, for example, a port of a square rod. This is not limited herein.

Optionally, in this embodiment, a quarter-wave plate and a polarizer are further disposed at each output port of the optical cross connection apparatus, where the polarizer is configured to receive a light beam from the quarter-wave plate, the quarter-wave plate is configured to change incident circularly polarized light to linearly polarized light, and the polarizer is configured to reduce the linearly polarized light to unpolarized light.

Referring to FIG. 4, FIG. 4 is a schematic structural diagram of another embodiment of an optical cross connection apparatus according to the present invention. In this embodiment, a structure of an optical cross connection apparatus 40 is similar to the structure of the optical cross connection apparatus 30 shown in FIG. 3. A difference from the embodiment shown in FIG. 3 lies in that: In this embodiment, the optical cross connection apparatus further includes a converging lens 37 located between the first switch matrix 35 and the second switch matrix 36. In actual application, the converging lens 37 may also be a lens system. For convenience of description, the following embodiments are described by using a lens as an example.

For convenience of description, a location of an intersection of optical paths that are between the first switch matrix 35 and the second switch matrix 36 and that are of two light beams output by the first optical fiber 31 and the second optical fiber 32 when the optical cross connection apparatus 30 in FIG. 3 is in a first state is referred to as a location A. In this embodiment, a center of the converging lens 37 overlaps with the location A, and PPGs in two switches in the first switch matrix are all located on a same focal plane of the converging lens 37, and PPGs in two switches in the second switch matrix are all located on another focal plane of the converging lens 37.

In this embodiment, the control apparatus 39 is configured to adjust liquid crystals of switches in the first switch matrix 35 and the second switch matrix 36, so that the optical cross connection apparatus is in a first state or a second state, where the first state means that a light beam from the first optical fiber 31 is emitted from the fourth optical fiber 34, and a light beam from the second optical fiber 32 is emitted from the third optical fiber 33; and the second state means that a light beam from the first optical fiber 31 is emitted from the third optical fiber 33, and a light beam from the second optical fiber 32 is emitted from the fourth optical fiber 34.

A shadowless light beam between the first switch matrix 35 and the second switch matrix 36 in the figure is a light beam obtained when the optical cross connection apparatus is in the first state, and a shadow light beam is a light beam obtained when the optical cross connection apparatus is in the second state.

When the control apparatus 39 adjusts the switches in the first switch matrix 35 and the second switch matrix 36, so that the optical cross connection apparatus is in the first state, because the center of the converging lens 37 overlaps with the location A, and a first light beam and a second light beam pass through the center of the converging lens 37 when passing through the converging lens 37, the converging lens 37 does not change propagation directions of the first light beam and the second light beam. Therefore, when the optical cross connection apparatus 40 is in the first state, an optical path of a light beam in the optical cross connection apparatus is the same as the optical path in the optical cross connection apparatus shown in FIG. 3, and details are not described herein.

For convenience of description below, a location at which a light beam emitted by the second optical fiber 32 when the optical cross connection apparatus is in the first state is incident to the second switch matrix 36 is referred to as a location B, and an optical path of the light beam between the first switch matrix 35 and the second switch matrix 36 is referred to as an optical path L, and a location at which the light beam is incident to the second switch matrix 36 is referred to as a location C.

Specifically, that the control apparatus adjusts the switches in the first switch matrix and the second switch matrix to make the optical cross connection apparatus 30 be in the second state is described in the following process:

In the first switch matrix, the control apparatus 39 controls a liquid crystal in a switch (1, 1), so that a light beam from the first optical fiber 31 is incident to a PPG in the switch in a left-handed polarization state. The PPG changes the light beam to be in a right-handed polarization state and makes the light beam deflected upward at an angle θ for emission to the converging lens 37. An incident optical path on which the light beam is incident to the converging lens 37 is parallel to the optical path L, and the location B is located on the focal plane of the converging lens 37. Therefore, the first light beam is converged by the converging lens 37 to the location B of the PPG. According to the geometry, it can be learned that an incident angle at which the light beam is incident to the location B is θ. Because the light beam is in a left-handed polarization state in this case, after passing through the PPG, the light beam is deflected upward at the angle θ for emission, that is, vertically emitted from the PPG to the third optical fiber 33.

In the first switch matrix, the control apparatus 39 controls a liquid crystal in a switch (2, 1), so that a light beam from the second optical fiber 32 is incident to a PPG in the switch in a right-handed polarization state. The PPG changes the light beam to be in a left-handed polarization state and makes the light beam deflected downward at the angle θ for emission to the converging lens 37. Similarly, the light beam is converged by the converging lens 37 to the location C of the PPG in the switch (2, 1) in the second switch matrix, and after passing through the PPG, the light beam is deflected downward at the angle θ for emission, that is, vertically emitted from the PPG to the fourth optical fiber 34.

In this embodiment, compared with the foregoing embodiment, because the first switch matrix 35 and the second switch matrix 36 do not need to be shifted when the optical cross connection apparatus is adjusted from the first state to the second state, it is more advantageous for miniaturization of the optical cross connection apparatus.

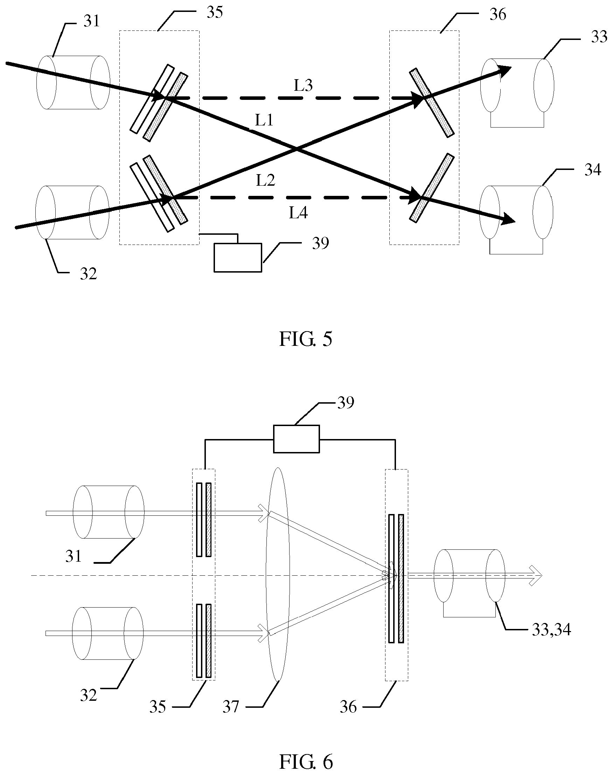

In the embodiments shown in FIG. 3 and FIG. 4, a preset angle at which a light beam is incident to an output port is 90 degrees. Optionally, the preset angle may not be 90 degrees. As shown in FIG. 5, FIG. 5 is a schematic structural diagram of another embodiment of an optical cross connection apparatus according to the present invention. In this embodiment, a structure of the optical cross connection apparatus is similar to the structure of the optical cross connection apparatus shown in FIG. 4. A difference from the embodiment shown in FIG. 4, in this embodiment, no lens is disposed between the first switch matrix and the second switch matrix; in the first switch matrix 35, a switch (1, 1) rotates clockwise at an angle θ compared with the switch (1, 1) in the first switch matrix in FIG. 4, and a switch (2, 1) rotates counterclockwise at the angle θ compared with the switch (2, 1) in the first switch matrix in FIG. 4. In the second switch matrix 36, a switch (1, 1) rotates counterclockwise at the angle θ compared with the switch (1, 1) in the second switch matrix in FIG. 4, and a switch (2, 1) rotates clockwise at the angle θ compared with the switch (2, 1) in the second switch matrix in FIG. 3.

The control apparatus 39 is configured to control liquid crystals in switches in the first switch matrix, so that the optical cross connection apparatus is in a first state or a second state.

Specifically, in this embodiment, a working process of the control apparatus 39 and polarization directions at locations of light beams when the optical cross connection apparatus is in the first state or the second state are the same as that of the optical cross connection apparatus in the embodiment shown in FIG. 4 respectively. A difference lies in that: In this embodiment, a light beam emitted from an input port is incident to the first switch matrix at an incident angle that is not 90 degrees, and a light beam emitted by the second switch matrix is also incident to an output port not at an incident angle that is not 90 degrees.

For convenience of description, when the optical cross connection apparatus is in the first state, optical paths that are of light beams emitted by the first optical fiber 31 and the second optical fiber 32 and that are between the first switch matrix and the second switch matrix are referred to as an optical path L1 and an optical path L2 (both the optical path L1 and the optical path L2 are indicated by using solid lines in the figure) respectively. When the optical cross connection apparatus is in the second state, optical paths that are of light beams emitted by the first optical fiber 31 and the second optical fiber 32 and that are between the first switch matrix and the second switch matrix are referred to as an optical path L3 and an optical path L4 (both the optical path L3 and the optical path L4 are indicated by using dashed lines in the figure) respectively.

In this embodiment, the optical path L3 is parallel to the optical path L4, the optical path L2 and the optical path L3 are converged at a same location on the switch (1, 1) in the second switch matrix 36, and an emergent optical path that is obtained after the optical path L2 is deflected downward after passing through the switch (1, 1) overlaps with an emergent optical path that is obtained after the optical path L3 is deflected upward after passing through the switch (1, 1). The optical path L1 and the optical path L4 are converged at a same location on the switch (2, 1) in the second switch matrix 36, and an emergent optical path that is obtained after the optical path L4 is deflected downward after passing through the switch (2, 1) overlaps with an emergent optical path that is obtained after the optical path L1 is deflected upward after passing through the switch (2, 1).

Referring to FIG. 6, FIG. 6 is a schematic structural diagram of another embodiment of an optical cross connection apparatus according to the present invention. In this embodiment, a structure of the optical cross connection apparatus is similar to the structure of the optical cross connection apparatus shown in FIG. 4. A difference lies in that: In this embodiment, a row of the first switch matrix 35 is parallel to a row of the second switch matrix 36, and a column of the first switch matrix 35 is perpendicular to a column of the second switch matrix 36 (specifically, the row and the column of the first switch matrix are all parallel to the paper in FIG. 6); and deflection planes of all PPGs in the first switch matrix 35 are all parallel to a first preset plane, and deflection planes of all PPGs in the second switch matrix are all parallel to a second preset plane (specifically, a plane parallel to the paper in FIG. 6), where the first preset plane is perpendicular to the second preset plane.

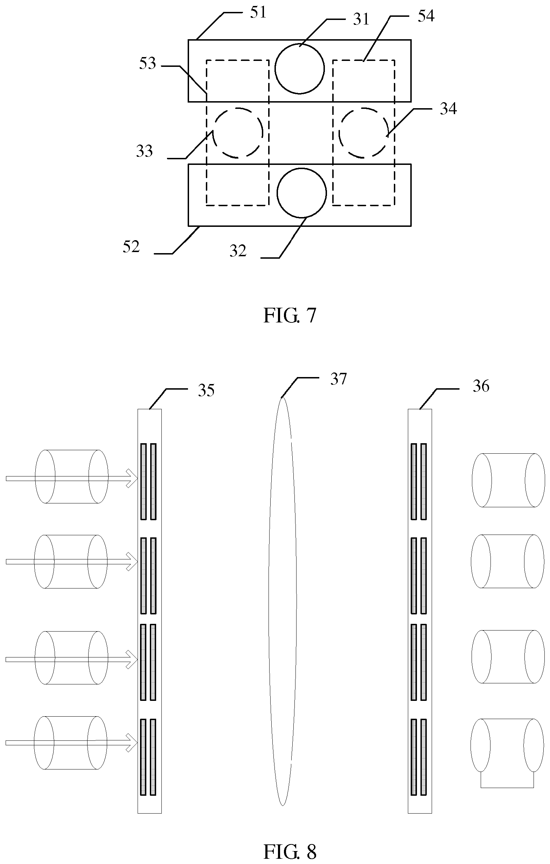

Specifically, in the first switch matrix, a PPG in a switch (1, 1) is located above a PPG in a switch (2, 1), and in the second switch matrix, a PPG in a switch (2, 1) is located outside a PPG in a switch (1, 1). As shown in FIG. 7, FIG. 7 is a right view of the first switch matrix, the second switch matrix, and the first to fourth optical fibers in the optical cross connection apparatus shown in FIG. 6. A switch 51 is the switch (1, 1) in the first switch matrix, a switch 52 is the switch (2, 1) in the first switch matrix, a switch 53 is the switch (1, 1) in the second switch matrix, and a switch 54 is the switch (2, 1) in the second switch matrix.

Specifically, that the control apparatus 39 adjusts switches in the first switch matrix and the second switch matrix to make the optical cross connection apparatus be in a first state is described in the following process:

In the first switch matrix 35, the switch (1, 1) receives a light beam from the first optical fiber 31, and emits outward a light beam whose polarization state is a left-handed polarization state at a deflection angle θ. The switch (2, 1) receives a light beam from the second optical fiber 32, and emits inward a light beam whose polarization state is a right-handed polarization state at the deflection angle θ.

Both an optical path L1 on which the light beam from the switch (1, 1) is emitted to the converging lens 37 and an optical path L2 on which the light beam from the switch (2, 1) is emitted to the converging lens 37 are parallel to an optical axis L of the converging lens 37, and any two of the optical path L1, the optical path L2, or the optical axis L are located on two different planes.

The converging lens 37 converges the light beam from the switch (1, 1) in the first switch matrix 35 to the switch (2, 1) in the second switch matrix 36 downward and makes the light beam deflected upward at the angle θ for emission to the fourth optical fiber 34. The converging lens 37 converges the light beam from the switch (2, 1) in the first switch matrix 35 to the switch (1, 1) in the second switch matrix 36 upward and makes the light beam deflected downward at the angle θ for emission to the third optical fiber 33.

Specifically, that the control apparatus 39 adjusts the switches in the first switch matrix and the second switch matrix to make the optical cross connection apparatus be in a second state is described in the following process:

In the first switch matrix 35, the switch (1, 1) makes the received light beam deflected inward at an angle θ and emits the light beam in a right-handed polarization state. The switch (2, 1) makes the received light beam deflected outward at the angle θ in a left-handed polarization state.

Both an optical path L3 on which a light beam from the switch (1, 1) is emitted to the converging lens 37 and an optical path L4 on which the light beam from the switch (2, 1) is emitted to the converging lens 37 are parallel to an optical axis L of the converging lens 37, and any two of the optical path L3, the optical path L4, or the optical axis L are located on two different planes.

According to the geometry, it can be learned that the optical path L3 is parallel to the optical path L2, and the optical path L4 is parallel to the optical path L1. According to optical characteristics of a converging lens, it can be learned that the converging lens 37 converges the light beam whose incident optical path is L3 to the switch (1, 1) in the second switch matrix 36, and converges the light beam whose incident optical path is L4 to the switch (2, 1) in the second switch matrix 36.

The switch (1, 1) in the second switch matrix 36 makes the light beam deflected upward at the angle θ and emits the light beam to the third optical fiber 33, and the switch (2, 1) makes the light beam deflected downward at the angle θ and emits the light beam to the fourth optical fiber 34.

In this embodiment, because the first switch matrix does not need to be located on a focal plane of the converging lens, there is no requirement on a distance between the first switch matrix and the converging lens, and a volume of the optical cross connection apparatus does not change when the optical cross connection apparatus is adjusted to a different working state and components thereof are relatively compact. Therefore, compared with the embodiment shown in FIG. 4, the optical cross connection apparatus in this embodiment can be more miniaturized.

In the foregoing embodiments, when each light beam passes through the first switch matrix, because the light beam passes through only one switch (including one liquid crystal and one PPG), after the light beam comes out from the first switch matrix, there are two options for an optical path, and each light beam can be emitted only from either of two output ports. Optionally, when passing through the first switch matrix, each light beam passes through m switches successively, where m is an integer greater than or equal to 2. The following provides description with reference to FIG. 8 by using an example.

In a first possible implementation of the present invention, as shown in FIG. 8, FIG. 8 is a schematic structural diagram of another embodiment of an optical cross connection apparatus according to the present invention. One shaded box in FIG. 8 represents one switch. In this embodiment, a structure of the optical cross connection apparatus is similar to the structure of the optical cross connection apparatus shown in FIG. 4. A difference lies in that: In this embodiment, both quantities of input ports and output ports of the optical cross connection apparatus are x (in FIG. 8, x=4), the first switch matrix 35 and the second switch matrix 36 each include x×m (in FIG. 8, m=2) switches in a matrix arrangement. x switches of the first column in the first switch matrix 35 are in a one-to-one correspondence with the x input ports, and each switch is configured to receive a light beam from a corresponding input port. x switches of the m^{th} column in the second switch matrix 36 are in a one-to-one correspondence with the x output ports, and each output port is used to receive a light beam from a corresponding switch.

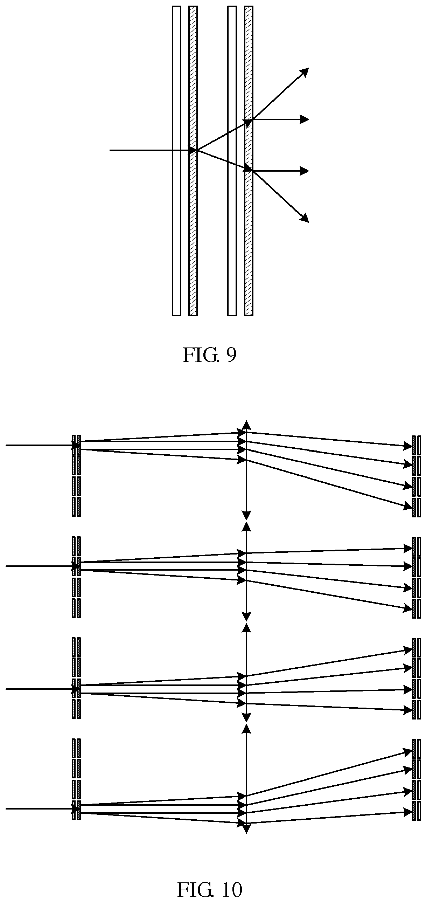

As shown in FIG. 9, FIG. 9 is a schematic diagram of four optical paths that can be implemented after a light beam successively passes through two switches. A box in the figure represents a liquid crystal, and a shadowed box represents a PPG. As shown in FIG. 10, four diagrams in FIG. 10 are respectively schematic diagrams of all optical paths that can be implemented after light beams output from four input ports pass through an optical cross connection apparatus.

Specifically, the first input port is used as an example. After a light beam from the input port successively passes through m switches of the first row in the first switch matrix 35, 2^{m} (in FIG. 9, m=2) optical paths can be implemented in total. x optical paths in the 2^{m} optical paths may be respectively refracted by the converging lens 37 located between the first switch matrix 35 and the second switch matrix 36 to x switches of the first column in the second switch matrix 36. One of the optical paths is implemented by controlling a liquid crystal of each switch of the first row in the first switch matrix 35. Optical paths of light beams emitted from other x-1 input ports are similar to an optical path of the light beam emitted from the first input port.

In addition, after a light beam incident to a switch of the j^{th} (j is a positive integer greater than or equal to 1 and less than or equal to m) row and the first column successively passes through switches of the j^{th} row in the second switch matrix, regardless of an incident angle of a light beam incident to a switch of the j^{th} row, liquid crystals of the switches of the j^{th} row are controlled, so that each light beam emitted from the switches of the j^{th} row is incident to the j^{th} output port at an incident angle within a predetermined range.

In this embodiment, the first switch matrix in the optical cross connection apparatus includes x×m switches, where each row of switches is opposite to one input port, so that a light beam output from the input port successively passes through m switches of the row. Because a switch includes a PPG, a characteristic of a polarization direction of circularly polarized light can be changed by using the PPG. For the m switches of each row in the first switch matrix, the control apparatus selects, by controlling the m switches, an emergent angle at which a polarized light beam output from the input port is emitted from the m^{th} switch, to select which row of switches to which the light beam is incident when the light beam is incident to the second switch matrix. In this way, the light beam is incident to an output port corresponding to a row after successively passing through switches of the row in the second switch matrix. Because the light beam needs to be incident to the output port at a preset angle when being coupled to the output port, in the present invention, the control apparatus further controls the row of switches in the second switch matrix to change a propagation angle of the light beam, so that the light beam can be incident at a preset angle when the light beam is incident to the output port.

It should be noted that in the embodiment shown in FIG. 8, 2^{m} is equal to x. In actual application, x may be less than 2^{m}. In addition, a quantity of output ports of the optical cross connection apparatus may be also larger than a quantity of input ports, as long as the quantity of output ports is less than 2^{m}. A specific set quantity of output ports depends on an actual situation.

It should be noted that in the embodiment shown in FIG. 8, a quantity of columns of the second switch matrix is equal to a quantity of columns of the first switch matrix. In actual application, the quantity of columns of the second switch matrix may be also less than the quantity of columns of the first switch matrix, as long as a light beam emitted from the second switch matrix can be incident at a preset angle when the light beam is incident to an output port. A specific quantity of columns of the second switch matrix depends on an actual design situation.

In the present invention, in the first switch matrix and the second switch matrix of the optical cross connection apparatus, PPGs in switches of a same column are different PPGs, or PPGs in switches of a same column may be implemented by a same PPG with a relatively large area. This is not limited herein. However, because the control apparatus needs to control a liquid crystal in each switch to select an optical path used by a light beam when the light beam passes through the switch, liquid crystals in different switches cannot be implemented by a same liquid crystal.

In the first possible implementation described in the foregoing, the rows of the first switch matrix and the rows of the second switch matrix are parallel to each other, and the columns of the first switch matrix and the columns of the second switch matrix are parallel to each other, and deflection planes of all PPGs in the first switch matrix and deflection planes of all PPGs in the second switch matrix are all parallel to the preset plane (which is specifically the paper in FIG. 8). Optionally, in the second possible implementation of the present invention, a difference from the first possible implementation lies in that: The second switch matrix and an output port in this implementation are rotated by 90 degrees in a same direction compared with the second switch matrix and an output port in the first implementation, that is, rows of the first switch matrix and rows of the second switch matrix are parallel to each other, columns of the first switch matrix and columns of the second switch matrix are perpendicular to each other; and deflection planes of all PPGs in the first switch matrix are all parallel to a first preset plane, and deflection planes of all PPGs in the second switch matrix are all parallel to a second preset plane, where the first preset plane is perpendicular to the second preset plane. Correspondingly, compared with an optical path between the lens and the second switch matrix in the first implementation, the lens in this implementation makes an optical path between the lens and the second switch matrix rotate by 90 degrees.

Alternatively, optionally, in the second possible implementation of the present invention, rotation angles of the second switch matrix and the output port in this implementation may not be 90 degrees compared with rotation angles of the second switch matrix and the output port in the first implementation, but may be other angles. This is not limited herein.

In the foregoing embodiment, a switch includes only one liquid crystal and one PPG, that is, a propagation angle of each light beam is changed after the light beam passes through one switch. Optionally, in other possible implementations of the present invention, a switch includes two PPGs and one liquid crystal successively; one of the two PPGs is configured to receive a light beam from the liquid crystal, and emits the light beam to the other PPG.

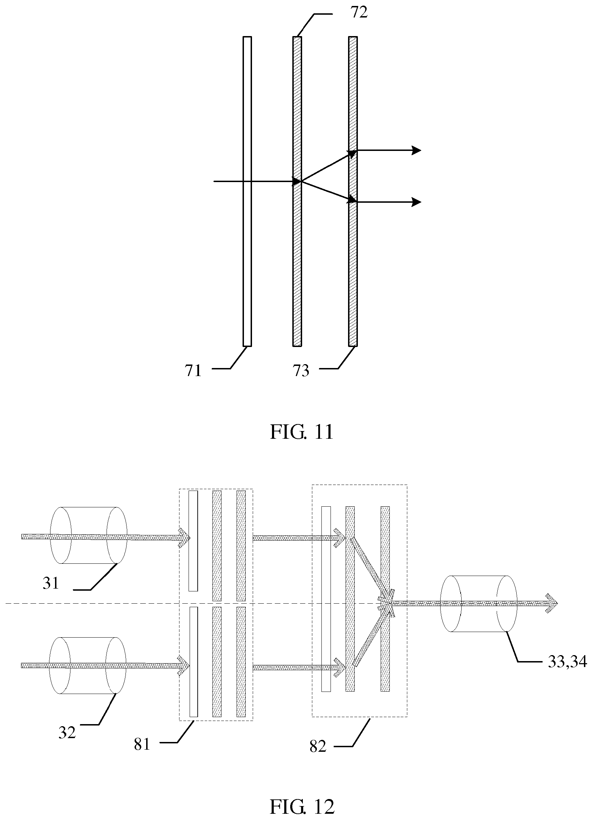

As shown in FIG. 11, FIG. 11 is a schematic diagram of an optical path when a light beam passes through a switch including two PPGs and one liquid crystal. The light beam is incident to a PPG 72 after passing through a liquid crystal 71, and is incident to a PPG 73 after being emitted from a PPG 72. If the light beam incident to the liquid crystal 71 is in a right-handed polarization state, when the liquid crystal 71 satisfies a first condition, the light beam is incident to the PPG 72 in a left-handed polarization state after passing through the liquid crystal 71, is changed to be in a right-handed polarization state after passing through the PPG 72, is deflected at an angle θ in a first preset direction (upward in FIG. 11), and is incident to the PPG 73. The light beam is changed to be in a left-handed polarization state after passing through the PPG 73 and is deflected at the angle θ in a second preset direction (downward in FIG. 11) for emission. When the liquid crystal 71 satisfies a second condition, the light beam is incident to the PPG 72 in a right-handed polarization state after passing through the liquid crystal 71, is changed to be in a left-handed polarization state after passing through the PPG 72, and is deflected at the angle θ in the second preset direction (downward in FIG. 11), and is incident to the PPG 73. The light beam is changed to be in a right-handed polarization state after passing through the PPG 73, and is deflected at the angle θ in the first preset direction (upward in FIG. 11) for emission.

Therefore, when a light beam in a right-handed polarization state is incident to a switch, if an optical path of the light beam needs to be translated in the first preset direction, the liquid crystal 71 needs to satisfy the first condition and the polarization state of the light beam is changed to a left-handed polarization state after the light beam is emitted from a displacement switch; and if the optical path of the light beam needs to be translated in the second preset direction, the liquid crystal 71 needs to satisfy the second condition, and the polarization state of the light beam keeps unchanged after the light beam is emitted from the displacement switch.

Similarly, when a light beam in a left-handed polarization state is incident to a displacement switch, if an optical path of the light beam needs to be translated in the first preset direction, the liquid crystal 71 needs to satisfy the second condition and the polarization state of the light beam keeps unchanged after the light beam is emitted from the displacement switch; and if the optical path of the light beam needs to be translated in the second preset direction, the liquid crystal 71 needs to satisfy the first condition, and the polarization state of the light beam is changed to a right-handed polarization state after the light beam is emitted from the displacement switch.

In this way, two PPGs are disposed in parallel, so that an optical path of a light beam can be translated. A translation direction of the optical path of the light beam is selected by using a liquid crystal in front of the two PPGs. With reference to an embodiment shown in FIG. 12, the following provides detailed description by using an example.

Referring to FIG. 12, FIG. 12 is a schematic structural diagram of another embodiment of an optical cross connection apparatus according to the present invention.

In this embodiment, a structure of an optical cross connection apparatus 80 is similar to the structure of the optical cross connection apparatus shown in FIG. 5. A difference lies in that: In this embodiment, there is no lens between a first switch matrix 81 and a second switch matrix 82 of the optical cross connection apparatus, and each switch in the optical cross connection apparatus shown in FIG. 5 includes only one liquid crystal and one PPG, but each switch in the optical cross connection apparatus in this embodiment is the switch shown in FIG. 11.

In this embodiment, a control apparatus controls a liquid crystal of a switch of the first row in the first switch matrix 81, so that a light beam from a first optical fiber 31 is translated towards the outside of the paper after passing through a switch (1, 1) in the first switch matrix 81, and an optical path of the light beam and a switch of the second row in the second switch matrix 82 are on a same plane. In this way, the light beam may be incident to a switch (2, 1) in the second switch matrix 82, and after passing through the switch (2, 1) in the second switch matrix 82, the light beam is translated downward to be located on a same plane as a fourth optical fiber 34, so that the light beam emitted from the switch (2, 1) in the second switch matrix 82 can be incident to the fourth optical fiber 34.

Alternatively, a light beam from a first optical fiber 31 may be translated towards the inside of the paper after passing through a switch (1, 1) in the first switch matrix 81, and an optical path of the light beam and the first row of switches in the second switch matrix 82 are on a same plane. In this way, the light beam may be incident to the switch (1, 1) in the second switch matrix 82, and after passing through the switch (1, 1) in the second switch matrix 82, the light beam is translated downward to be located on a same plane as a third optical fiber 33, so that the light beam emitted from the switch (1, 1) in the second switch matrix 82 can be incident to the third optical fiber 33.

An optical path of a light beam from a second optical fiber 32 is similar thereto, and details are not described herein.

Optionally, in the optical cross connection apparatus shown in FIG. 12, a quantity of input ports in the optical cross connection apparatus is x, and a quantity of output ports is y, where both x and y are integers greater than or equal to 2. Correspondingly, the first switch matrix 81 is a matrix x×m, the x input ports are in a one-to-one correspondence with x switches of the first column in the switch matrix x×m. The second switch matrix 82 is a matrix y×n, and the y output ports are in a one-to-one correspondence with y switches of the last column in the switch matrix y×n. Rows of the switch matrix x×m are parallel to rows of the switch matrix y×n each other, and columns of the switch matrix x×m are perpendicular to columns of the switch matrix y×n each other.

Specifically, in this embodiment, x=y. For the j^{th} output port in the x input ports, j is any integer ranging from 1 to x. After a light beam output from the j^{th} output port passes through m switches of the j^{th} row in the first switch matrix 81, there are 2^{m} emergent optical paths of the light beam when the light beam is emitted from the first switch matrix 81. In the 2^{m} optical paths, x optical paths are in a one-to-one correspondence with x rows of switches in the second switch matrix 82. Each optical path can be directly incident to a first switch of a corresponding row in the second switch matrix 82, and after passing through n switches of the row, the optical path is translated to a plane on which the output ports are located and is directly incident to an output port corresponding to the row of switches. A specific value of n for the second switch matrix and a distance between two PPGs in each switch in the second switch matrix determine a maximum displacement of a light beam after the light beam passes through the second switch matrix. Therefore, the specific value of n for the second switch matrix depends on a displacement of a light beam in actual application, and is unrelated to a value of m.

In actual application, y may also be greater than x, that is, no light beam is output from some output ports. This may be designed according to an actual application situation, as long as y is less than 2^{m}.

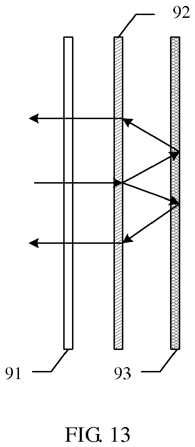

In the embodiment shown in FIG. 12, two PPGs are disposed in parallel in the switches in the first switch matrix and the second switch matrix separately, so that each light beam passes through the two PPGs successively to implement optical path translation. Optionally, in other possible implementations of the present invention, a switch does not include one liquid crystal and two PPGs that are in parallel, but includes one liquid crystal, one PPG, and one reflecting member that are in parallel. As shown in FIG. 13, FIG. 13 is a schematic diagram of an optical path when a light beam passes through a switch including a liquid crystal, a PPG, and a reflecting member that are in parallel. The light beam is incident to a reflecting member 93 after passing through a liquid crystal 91 and a PPG 92, is reflected by the reflecting member 93 back to the PPG 92, and is emitted after successively passing through the PPG 92 and the liquid crystal 91.

If a light beam incident to the liquid crystal 91 is in a right-handed polarization state:

When the liquid crystal 91 satisfies a first condition, the light beam is in a left-handed polarization state when the light beam is incident to the PPG 92 after passing through the liquid crystal 91, is changed to be in a right-handed polarization state after passing through the PPG 92, is deflected at an angle θ in a first preset direction (upward in FIG. 13), and is incident to the reflecting member 93. The light beam is changed to be in a left-handed polarization state after being reflected by the reflecting member 93. The light beam in the left-handed polarization state is incident to the PPG 92 at an incident angle θ again, is changed to be in a right-handed polarization state after passing through the PPG 92, is deflected at the angle θ in a second preset direction (downward in FIG. 13), and is emitted to the liquid crystal 91. The light beam is in a left-handed polarization state after passing through the liquid crystal 91.

When the liquid crystal 91 satisfies a second condition, the light beam is in a right-handed polarization state when the light beam is incident to the PPG 92 after passing through the liquid crystal 91, is changed to be in a left-handed polarization state after passing through the PPG 92, is deflected at an angle θ in a second preset direction (downward in FIG. 13), and is incident to the reflecting member 93. The light beam is changed to be in a right-handed polarization state after being reflected by the reflecting member 93. The light beam in the right-handed polarization state is incident to the PPG 92 at an incident angle θ again, is changed to be in a left-handed polarization state after passing through the PPG 92, is deflected at the angle θ in a first preset direction (upward in FIG. 13) and is emitted to the liquid crystal 91. The light beam is in a left-handed polarization state after passing through the liquid crystal 91.

Therefore, when a light beam in a right-handed polarization state is incident to a switch, if an optical path of the light beam needs to be translated in the first preset direction, the liquid crystal 91 needs to satisfy the first condition, the polarization state of the light beam is changed to a left-handed polarization state after the light beam is emitted from the switch, and a propagation direction of the light beam is opposite; and if the optical path of the light beam needs to be translated in the second preset direction, the liquid crystal 91 needs to satisfy the second condition, the polarization state of the light beam is changed to a left-handed polarization state after the light beam is emitted from a displacement switch, and the propagation direction of the light beam is opposite.

Similarly, when a light beam in a left-handed polarization state is incident to a switch, if an optical path of the light beam needs to be translated in the first preset direction, the liquid crystal 91 needs to satisfy the second condition, the polarization state of the light beam is changed to a right-handed polarization state after the light beam is emitted from the switch, and a propagation direction of the light beam is opposite; and if the optical path of the light beam needs to be translated in the second preset direction, the liquid crystal 91 needs to satisfy the first condition, the polarization state of the light beam is changed to a right-handed polarization state after the light beam is emitted from a displacement switch, and the propagation direction of the light beam is opposite.

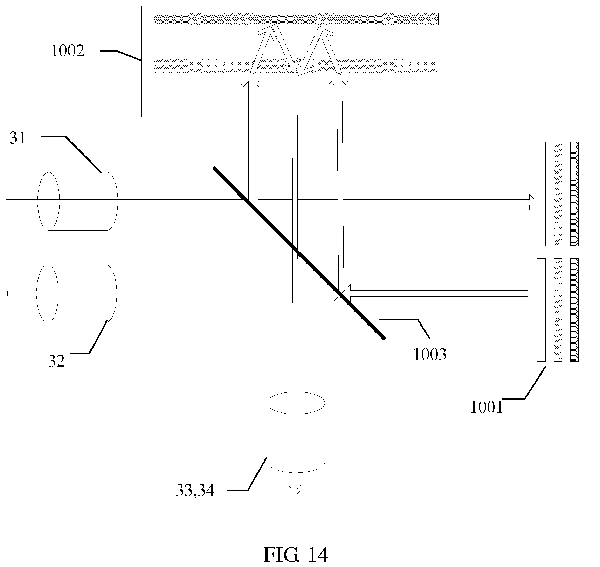

In this way, a PPG and a reflecting member are disposed in parallel, so that a light beam passes through a PPG twice to translate an optical path of the light beam. A translation direction of the optical path of the light beam is selected by using a liquid crystal in front of the PPG. With reference to an embodiment shown in FIG. 14, the following provides detailed description by using an example.

Referring to FIG. 14, FIG. 14 is a schematic structural diagram of another embodiment of an optical cross connection apparatus according to the present invention. A difference from the embodiment shown in FIG. 12 lies in that: In this embodiment, the optical cross connection apparatus further includes a light guide member 1003, and a first switch matrix and a second switch matrix include the switch shown in FIG. 13. In this embodiment, optical paths on an incident side and an emergent side of the first switch matrix in the embodiment shown in FIG. 12 are folded and optical paths on an incident side and an emergent side of the second switch matrix therein are folded by adding the switch shown in FIG. 13 to the first switch matrix and the second switch matrix and disposing the light guide member 1003. The following describes this embodiment in detail.

In this embodiment, the optical cross connection apparatus includes a control apparatus (not shown in the figure), a first switch matrix 1001, a second switch matrix 1002, the light guide member 1003, two input ports, and two output ports. Specifically, the optical cross connection apparatus includes a first optical fiber 31, a second optical fiber 32, a third optical fiber 33, and a fourth optical fiber 34. The two input ports are ports of the first optical fiber 31 and the second optical fiber 32 respectively. The two output ports are ports of the third optical fiber 33 and the fourth optical fiber 34 respectively. The light guide member 1003 is located between the input ports and the first switch matrix 1001, and located between the second switch matrix 1002 and the output ports. The input ports, the second switch matrix 1002, the first switch matrix 1001, and the output ports are located surrounding the light guide 1003 successively.

The first switch matrix 1001 and the second switch matrix 1002 each include 2×1 switches in a matrix arrangement, where the switch is the switch shown in FIG. 13. Switches of the first column in the first switch matrix 1001 are opposite to the input ports respectively, and deflection planes of PPGs in the first switch matrix are all parallel to a first preset plane; switches of the first column in the second switch matrix 1002 are opposite to the output ports respectively, and deflection planes of PPGs in the second switch matrix 1002 are all parallel to a second preset plane (which is specifically the paper in FIG. 14). The first preset plane is perpendicular to the second preset plane. Specifically, in this embodiment, the first optical fiber 31 is located above the second optical fiber 32, and the third optical fiber 33 is located outside the fourth optical fiber 34.

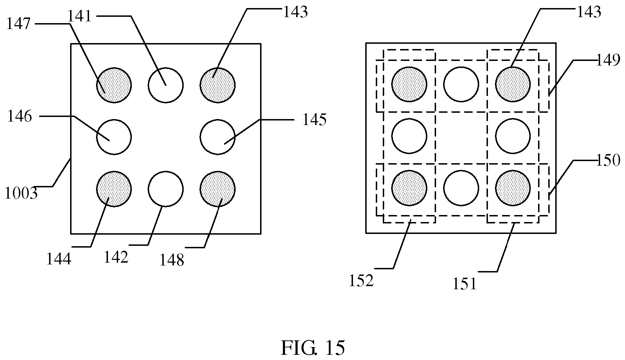

Referring to FIG. 15, the left figure in FIG. 15 is a left view of the light guide member 1003 in the embodiment shown in FIG. 14, and the right figure shows a location relationship between the light guide member, and a first switch matrix and a second switch matrix. In the figure, a circular white region in a box of the light guide member 1003 is a transmission region, and a circular shaded region in the box of the light guide member 1003 is a reflection region. A reflective film is plated in the reflection region of the light guide member 1003, and a light-transmitting sheet or a through hole is disposed in a light transmission region. This is not limited herein. Specifically, the light guide member may be a reflecting mirror having a light transmission region or a light-transmitting sheet with a partial region plated with a reflective film. This is not limited herein.

A light beam emitted from the first optical fiber 31 passes through a light transmission region 141 of the light guide member 1003 and is incident to a switch (1, 1) in the first switch matrix 1001, and a light beam emitted from the second optical fiber 32 passes through a light transmission region 142 of the light guide member 1003 and is incident to a switch (2, 1) in the first switch matrix 1001.

When the optical cross connection apparatus is adjusted to a first state, the control apparatus controls liquid crystals in the first switch matrix and the second switch matrix separately, to implement the following:

The switch (1, 1) (marked as 149 in the right figure in FIG. 15) in the first switch matrix 1001 receives a light beam from the first optical fiber 31 and translates the light beam towards the outside of the paper, and emits the light beam to a reflection region 143 of the light guide member 1003; and the light beam is incident to a switch (2, 1) (marked as 151 in the right figure in FIG. 15) in the second switch matrix 1002 after being reflected by the reflection region 143. The switch (2, 1) translates the light beam in a direction of a plane on which the output ports are located, and emits the light beam to a transmission region 145 of the light guide member 1003; and the light beam is directly incident to the third optical fiber 33 after passing through the transmission region 145.

The switch (2, 1) (marked as 150 in the right figure in FIG. 15) in the first switch matrix 1001 receives a light beam from the second optical fiber 32 and translates the light beam towards the inside of the paper, and emits the light beam to a reflection region 144 of the light guide member 1003; and the light beam is incident to a switch (1, 1) (marked as 152 in the right figure in FIG. 15) in the second switch matrix 1002 after being reflected by the reflection region 144. The switch (1, 1) translates the light beam in a direction of a plane on which the output ports are located, and emits the light beam to a transmission region 146 of the light guide member 1003; and the light beam is directly incident to the fourth optical fiber 34 after passing through the transmission region 146.

When the optical cross connection apparatus is adjusted to a second state, the control apparatus controls liquid crystals in the first switch matrix and the second switch matrix separately, to implement the following:

The switch (1, 1) in the first switch matrix 1001 receives a light beam from the first optical fiber 31 and translates the light beam towards the inside of the paper, and emits the light beam to a reflection region 147 of the light guide member 1003; and the light beam is incident to the switch (2, 1) in the second switch matrix 1002 after being reflected by the reflection region 147. The switch (2, 1) translates the light beam in the direction of the plane on which the output ports are located, and emits the light beam to the transmission region 146 of the light guide member 1003; and the light beam is directly incident to the fourth optical fiber 34 after passing through the transmission region 146.

The switch (2, 1) in the first switch matrix 1001 receives a light beam from the second optical fiber 32 and translates the light beam towards the outside of the paper, and emits the light beam to a reflection region 148 of the light guide member 1003; and the light beam is incident to the switch (1, 1) in the second switch matrix 1002 after being reflected by the reflection region 148. The switch (1, 1) translates the light beam in the direction of the plane on which the output ports are located, and emits the light beam to the transmission region 145 of the light guide member 1003; and the light beam is directly incident to the third optical fiber 33 after passing through the transmission region 145.

In this embodiment, compared with the embodiment shown in FIG. 12, optical paths on an incident side and an emergent side of the first switch matrix are folded, and optical paths on an incident side and an emergent side of the second switch matrix are folded. Therefore, compared with the optical cross connection apparatus in the embodiment shown in FIG. 12, the optical cross connection apparatus has a smaller volume. This is more advantageous for miniaturization of the optical cross connection apparatus.

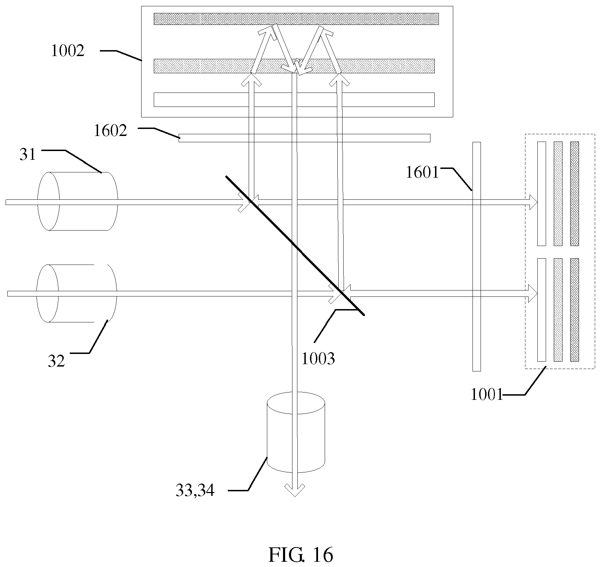

In the embodiment shown in FIG. 14, optical paths are distinguished by plating a reflective film and disposing a light transmission region on different regions of the light guide member. In another possible implementation of the present invention, optical paths are distinguished by using the light guide member by means of polarizing light splitting. Specifically, referring to FIG. 16, FIG. 16 is a schematic structural diagram of another embodiment of an optical cross connection apparatus according to the present invention.

A difference from the embodiment shown in FIG. 14 lies in that: In the optical cross connection apparatus of this embodiment, the light guide member is specifically a polarization beam splitter, and is configured to reflect P light and transmit S light, or is configured to reflect S light and transmit P light; and a quarter-wave plate 1601 is further disposed between the first switch matrix 1001 and the light guide member 1003, and a quarter-wave plate 1602 is disposed between the second switch matrix 1002 and the light guide member 1003. The quarter-wave plate is configured to change incident circularly polarized light to linearly polarized light, and change incident linearly polarized light to circularly polarized light. Specifically, for example, the quarter-wave plate can change incident left-handed polarized light to P light, change incident right-handed polarized light to S light, change incident P light to left-handed polarized light, and change incident S light to right-handed polarized light.

In an embodiment in which a light beam incident to an incidence port is not polarized light, optionally, polarizers are further disposed at input ports in the optical cross connection apparatus, so as to change an output light beam to linearly polarized light, that is, P light or S light.

P light is changed to S light after being reflected by a reflecting mirror, and S light is changed to P light after being reflected by the reflecting mirror. Therefore, in FIG. 16, after a light beam emitted from each input port is transmitted to the light guide member 1003 and is incident to the first switch matrix 1001, a polarization direction of the light beam is changed when the light beam is reflected back to the light guide member 1003 after passing through the first switch matrix 1001, the light beam is reflected by the light guide member 1003 to the second switch matrix 1002, and a polarization direction of the light beam is changed when the light beam is reflected back to the light guide member 1003 after passing through the second switch matrix 1002, so that the light beam can be transmitted to the light guide member 1003 and emitted to an output port. In this embodiment, optical paths of the light beams emitted from all the input ports in the optical cross connection apparatus are the same as optical paths in the optical cross connection apparatus in the embodiment shown in FIG. 14, and details are not described herein.

In this embodiment, because the light guide member is a polarization beam splitter, compared with the embodiment shown in FIG. 14, in term of a space structure, it is not strictly required in this embodiment that optical paths of a first light beam and a second light beam at different moments be strictly aligned with a transmission region and a reflection region on a light guide mirror.

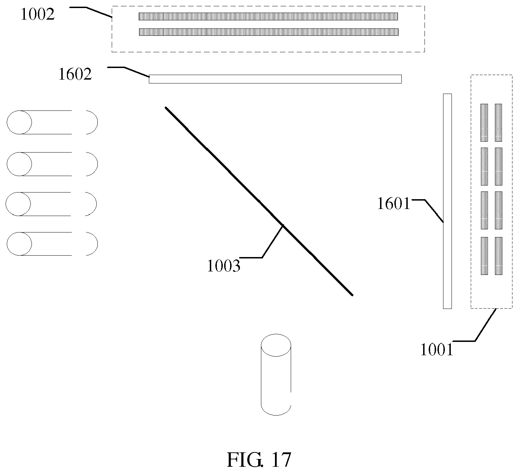

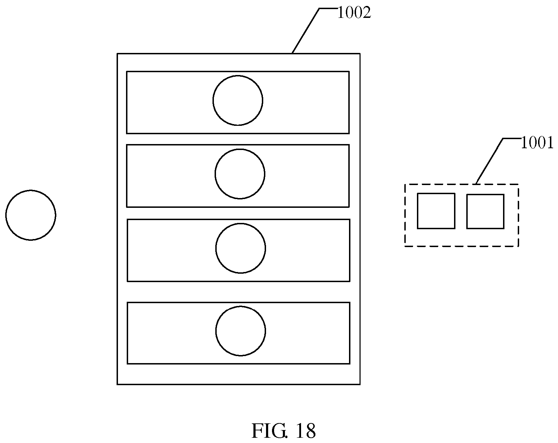

In the optical cross connection apparatus shown in FIG. 14 and FIG. 16, a quantity of output ports and a quantity of input ports can also be expanded, and correspondingly, a quantity of switches included in the first switch matrix and the second switch matrix needs to be increased. Specifically, after expansion is performed based on the optical cross connection apparatus shown in FIG. 16, as shown in FIG. 17 and FIG. 18, FIG. 17 is a schematic structural diagram of another embodiment of an optical cross connection apparatus according to the present invention, and FIG. 18 is a bottom view of input and output ports and first and second switch matrices in FIG. 17.

The optical cross connection apparatus includes x input ports and y output ports, and both x and y are integers greater than or equal to 2. Correspondingly, the first switch matrix 1001 is a matrix x×m, the x input ports are in a one-to-one correspondence with x switches of the first column in the switch matrix x×m. In the switch matrix x×m, switches of the first column to the (m―1)^{th} column (that is, the first m-1 columns facing the input ports) each are the switch (that is, a switch including one liquid crystal and two PPGs) shown in FIG. 11. Switches of the m^{th} column each are the switch (that is, a switch including one liquid crystal, one PPG, and one reflecting member that are in parallel successively) shown in FIG. 13. The second switch matrix 1002 is a matrix y×n, y switches of the n^{th} column in the switch matrix y×n are in a one-to-one correspondence with the y output ports. In the switch matrix y×n, switches of the first column to the (n―1)^{th} column (that is, the first m-1 columns facing the output ports) each are the switch (that is, a switch including one liquid crystal and two PPGs) shown in FIG. 11. Switches of the n^{th} column each are the switch (that is, a switch including one liquid crystal, one PPG, and one reflecting member that are in parallel successively) shown in FIG. 13.

Specifically, in FIG. 17, both x and y are equal to 4, and both m and n are equal to 2. Rows and columns of the first switch matrix 1001 are all parallel to the paper, and deflection planes of switches in the first switch matrix are perpendicular to the paper; rows of the second switch matrix 1002 are parallel to the paper, and columns thereof are perpendicular to the paper, and deflection planes of switches in the second switch matrix are parallel to the paper.

An area of the quarter-wave plate 1601 disposed between the first switch matrix 1001 and the light guide member 1003 is also increased, so that all optical paths between the light guide member 1003 and the first switch matrix 1001 can pass through the quarter-wave plate 1601. The quarter-wave plate 1602 disposed between the second switch matrix 1002 and the light guide member 1003 is similar thereto.

For the j^{th} output port in the x input ports, where j is any integer ranging from 1 to x, a light beam output from the j^{th} output port is transmitted to the light guide member 1003, and is incident to the first switch of the j^{th} row in the first switch matrix 1001, that is, a switch (j, 1). When the light beam is emitted from the switch (j, 1) after passing through switches of the j^{th} row, 2^{2m} optical paths can be implemented. In the 2^{2m} optical paths, x optical paths are in a one-to-one correspondence with x rows of switches in the second switch matrix 1002. Specifically, in the x optical paths, a light beam corresponding to each optical path can be directly incident to switches of a corresponding row in the second switch matrix 1002 after being reflected by the light guide member 1003 and passing through the quarter-wave plate 1602; after passing through n switches of the row, the optical path is translated to a plane on which the output ports are located, is directly transmitted to the light guide member 1003, and is incident to an output port corresponding to the switches of the row.

With reference to FIG. 17 and FIG. 18, the foregoing describes an implementation in which quantities of input ports and output ports are expanded based on the optical cross connection apparatus shown in FIG. 16. In actual application, an implementation in which quantities of input ports and output ports are expanded based on the optical cross connection apparatus shown in FIG. 14 is the same as that in the optical cross connection apparatus shown in FIG. 17, except that the light guide member in FIG. 17 that is specifically a polarization beam splitter is replaced with a light guide member provided with multiple light transmission regions and reflection regions and the two quarter-wave plates in FIG. 17 are removed.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the claims the present invention.

## Claims

1. An optical cross connection apparatus (30), comprising:
x input ports, y output ports, a first switch matrix (35), a second switch matrix (36), and a control apparatus (39), wherein x and y are positive integers, and y is greater than or equal to x, wherein
the first switch matrix comprises x×m switches in a matrix arrangement, and x switches of the first column in the first switch matrix are respectively configured to receive polarized light beams from the x input ports; the second switch matrix comprises y×n switches in a matrix arrangement, and the y output ports are respectively used to receive light beams from y switches of the last column in the second switch matrix; and each input port of the x input ports is corresponding to an output port;
a switch in the first switch matrix and a switch in the second switch matrix each comprise at least one polymer polarization grating, PPG (352), wherein the PPG is configured to change incident left-handed polarized light to right-handed polarized light and emit the right-handed polarized light at a preset deflection angle in a deflection plane of the PPG in a first preset direction, and change incident right-handed polarized light to left-handed polarized light and emit the left-handed polarized light at the preset deflection angle in the deflection plane of the PPG in a second preset direction, wherein the first preset direction is opposite to the second preset direction; and
the control apparatus is configured to control the switches in the first switch matrix and the second switch matrix when it is determined that a corresponding output port of the j^{th} input port is the k^{th} output port, so that a light beam output from the j^{th} input port is incident to the k^{th} output port at a preset angle after successively passing through switches of the j^{th} row in the first switch matrix and switches of the k^{th} row in the second switch matrix, wherein j is a positive integer less than or equal to x, and k is a positive integer less than or equal to y.

2. The optical cross connection apparatus according to claim 1, wherein the switch in the first switch matrix and the switch in the second switch matrix each further comprise one liquid crystal (351), and the PPG in the switch is configured to receive a light beam from the liquid crystal in the switch, wherein
the liquid crystal is configured to transmit incident light when a first condition is satisfied; and when a second condition is satisfied, change incident left-handed polarized light to right-handed polarized light and change incident right-handed polarized light to left-handed polarized light.

3. The optical cross connection apparatus according to claim 2, wherein a row of the first switch matrix is parallel to a row of the second switch matrix, a column of the first switch matrix is parallel to a column of the second switch matrix, and deflection planes of all PPGs in the first switch matrix and deflection planes of all PPGs in the second switch matrix are all parallel to planes formed by the rows and the columns.

4. The optical cross connection apparatus according to claim 2, wherein a row of the first switch matrix is parallel to a row of the second switch matrix, and a column of the first switch matrix is perpendicular to a column of the second switch matrix; and
deflection planes of all PPGs in the first switch matrix are all parallel to a first preset plane, and deflection planes of all PPGs in the second switch matrix are all parallel to a second preset plane, wherein the first preset plane is perpendicular to the second preset plane.

5. The optical cross connection apparatus according to claim 3 or 4, wherein the optical cross connection apparatus further comprises a lens system, (37) and the lens system is configured to respectively refract x light beams emitted from switches of the m^{th} column in the first switch matrix, to x switches of the first column in the second switch matrix.

6. The optical cross connection apparatus according to claim 1, wherein the switch in the first switch matrix and the switch in the second switch matrix each further comprise two PPGs and one liquid crystal, one of the two PPGs in the switch is configured to receive a light beam from the liquid crystal, and the light beam is emitted to the other PPG, wherein
the liquid crystal is configured to transmit incident light when a first condition is satisfied; and when a second condition is satisfied, change incident left-handed polarized light to right-handed polarized light and change incident right-handed polarized light to left-handed polarized light;
a row of the first switch matrix is parallel to a row of the second switch matrix, and a column of the first switch matrix is perpendicular to a column of the second switch matrix;
deflection planes of all PPGs in the first switch matrix are all parallel to a first preset plane, and deflection planes of all PPGs in the second switch matrix are all parallel to a second preset plane, wherein the first preset plane is perpendicular to the second preset plane; and
the control apparatus is configured to control the liquid crystal in the switch, so that the liquid crystal satisfies the first condition or the second condition.

7. The optical cross connection apparatus according to claim 1, wherein switches of the first column to the (m―1)^{th} column in the first switch matrix and switches of the first column to the (n―1)^{th} column in the second switch matrix each specifically comprise two PPGs and one liquid crystal, one of the two PPGs is configured to receive a light beam from the liquid crystal, and emit the light beam to the other PPG;
switches of the m^{th} column in the first switch matrix and switches of the n^{th} column in the second switch matrix each specifically comprise one liquid crystal, one PPG, and one reflecting member (93) that are in parallel successively, wherein the reflecting member is configured to receive a light beam from the PPG and reflect the light beam back to the PPG; and
the optical cross connection apparatus further comprises a light guide member, wherein the light guide member is configured to: transmit light beams from the x input ports, to the first switch matrix; reflect a light beam from the first switch matrix, to the second switch matrix; and transmit a light beam from the second switch matrix, to the output port.

8. The optical cross connection apparatus according to claim 1, wherein m=1, and n=1;
the switch in the first switch matrix and the switch in the second switch matrix each specifically comprise one liquid crystal, one PPG, and one reflecting member that are in parallel successively, wherein the reflecting member is configured to receive a light beam from the PPG and reflect the light beam back to the PPG; and
the optical cross connection apparatus further comprises a light guide member (1003), wherein the light guide member is configured to: transmit light beams from the x input ports, to the first switch matrix; reflect a light beam from the first switch matrix, to the second switch matrix; and transmit a light beam from the second switch matrix, to the output port.

9. The optical cross connection apparatus according to claim 7 or 8, wherein the light guide member is provided with a transmission region on an incident optical path of the light beam from the input port, is provided with a reflection region on an incident optical path of the light beam from the first switch matrix, and is provided with a transmission region on an incident optical path of the light beam from the second switch matrix.

10. The optical cross connection apparatus according to claim 7 or 8, wherein the light guide member is a polarization beam splitter; and
quarter-wave plates are disposed between the first switch matrix and the light guide member, and between the second switch matrix and the light guide member respectively.

## Patentansprüche

1. Optische Querverbindungsvorrichtung (30), umfassend:
x Eingangskanäle, y Ausgangskanäle, eine erste Schaltermatrix (35), eine zweite Schaltermatrix (36) und eine Steuervorrichtung (39), wobei x und y positive ganze Zahlen sind, und y größer oder gleich x ist, wobei
die erste Schaltermatrix x × m Schalter in einer Matrixanordnung umfasst, und x Schalter der ersten Spalte in der ersten Schaltermatrix jeweils zum Empfangen von polarisierten Lichtstrahlen von den x Eingangskanälen ausgelegt sind; die zweite Schaltermatrix y × n Schalter in einer Matrixanordnung umfasst, und die y Ausgangskanäle jeweils zum Empfangen von Lichtstrahlen von y Schaltern der letzten Spalte in der zweiten Schaltermatrix verwendet werden; und jeder Eingangskanal der x Eingangskanäle einem Ausgangskanal entspricht;
ein Schalter in der ersten Schaltermatrix und ein Schalter in der zweiten Schaltermatrix jeweils mindestens ein Polymerpolarisationsgitter, PPG, (352) umfassen, wobei das PPG so ausgelegt ist, dass es einfallendes linksdrehend polarisiertes Licht in rechtsdrehend polarisiertes Licht umwandelt, und das rechtsdrehend polarisierte Licht in einem voreingestellten Ablenkwinkel in einer Ablenkebene des PPGs in einer ersten voreingestellten Richtung emittiert, und einfallendes rechtsdrehend polarisiertes Licht in linksdrehend polarisiertes Licht umwandelt, und das linksdrehend polarisierte Licht im voreingestellten Ablenkwinkel in der Ablenkebene des PPGs in einer zweiten voreingestellten Richtung emittiert, wobei die erste voreingestellte Richtung entgegengesetzt zur zweiten voreingestellten Richtung ist; und
die Steuervorrichtung so ausgelegt ist, dass sie die Schalter in der ersten Schaltermatrix und der zweiten Schaltermatrix steuert, wenn bestimmt wird, dass ein entsprechender Ausgangskanal des j-ten Eingangskanals der k-te Ausgangskanal ist, so dass ein Lichtstrahl, der aus dem j-ten Eingangskanal ausgegeben wird, nach dem Durchtreten der Reihe nach durch Schalter der j-ten Zeile in der ersten Schaltermatrix und Schalter der k-ten Zeile in der zweiten Schaltermatrix in einem voreingestellten Winkel am k-ten Ausgangskanal einfällt, wobei j eine positive ganze Zahl kleiner oder gleich x ist, und k eine positive ganze Zahl kleiner oder gleich y ist.

2. Optische Querverbindungsvorrichtung nach Anspruch 1, wobei der Schalter in der ersten Schaltermatrix und der Schalter in der zweiten Schaltermatrix ferner jeweils einen Flüssigkristall (351) umfassen, und das PPG im Schalter zum Empfangen eines Lichtstrahls vom Flüssigkristall im Schalter ausgelegt ist, wobei der Flüssigkristall so ausgelegt ist, dass er, wenn eine erste Bedingung erfüllt wird, einfallendes Licht durchlässt und, wenn eine zweite Bedingung erfüllt wird, einfallendes linksdrehend polarisiertes Licht in rechtsdrehend polarisiertes Licht umwandelt und einfallendes rechtsdrehend polarisiertes Licht in linksdrehend polarisiertes Licht umwandelt.

3. Optische Querverbindungsvorrichtung nach Anspruch 2, wobei eine Zeile der ersten Schaltermatrix parallel zu einer Zeile der zweiten Schaltermatrix ist, eine Spalte der ersten Schaltermatrix parallel zu einer Spalte der zweiten Schaltermatrix ist, und Ablenkebenen aller PPGs in der ersten Schaltermatrix und Ablenkebenen aller PPGs in der zweiten Schaltermatrix allesamt parallel zu Ebenen sind, die durch die Zeilen und die Spalten gebildet werden.

4. Optische Querverbindungsvorrichtung nach Anspruch 2, wobei eine Zeile der ersten Schaltermatrix parallel zu einer Zeile der zweiten Schaltermatrix ist, und eine Spalte der ersten Schaltermatrix senkrecht zu einer Spalte der zweiten Schaltermatrix ist; und
Ablenkebenen aller PPGs in der ersten Schaltermatrix allesamt parallel zu einer ersten voreingestellten Ebene sind, und Ablenkebenen aller PPGs in der zweiten Schaltermatrix allesamt parallel zu einer zweiten voreingestellten Ebene sind, wobei die erste voreingestellte Ebene senkrecht zur zweiten voreingestellten Ebene ist.

5. Optische Querverbindungsvorrichtung nach Anspruch 3 oder 4, wobei die optische Querverbindungsvorrichtung ferner ein Linsensystem (37) umfasst, und das Linsensystem so ausgelegt ist, dass es x Lichtstrahlen, die von Schaltern der m-ten Spalte in der ersten Schaltermatrix emittiert werden, jeweils zu x Schaltern der ersten Spalte in der zweiten Schaltermatrix ablenkt.

6. Optische Querverbindungsvorrichtung nach Anspruch 1, wobei der Schalter in der ersten Schaltermatrix und der Schalter in der zweiten Schaltermatrix ferner jeweils zwei PPGs und einen Flüssigkristall umfassen, einer der beiden PPGs im Schalter zum Empfangen eines Lichtstrahls vom Flüssigkristall ausgelegt ist, und der Lichtstrahl zum anderen PPG emittiert wird, wobei
der Flüssigkristall so ausgelegt ist, dass er, wenn eine erste Bedingung erfüllt wird, einfallendes Licht durchlässt und, wenn eine zweite Bedingung erfüllt wird, einfallendes linksdrehend polarisiertes Licht in rechtsdrehend polarisiertes Licht umwandelt und einfallendes rechtsdrehend polarisiertes Licht in linksdrehend polarisiertes Licht umwandelt;
eine Zeile der ersten Schaltermatrix parallel zu einer Zeile der zweiten Schaltermatrix ist, und eine Spalte der ersten Schaltermatrix senkrecht zu einer Spalte der zweiten Schaltermatrix ist; und
Ablenkebenen aller PPGs in der ersten Schaltermatrix allesamt parallel zu einer ersten voreingestellten Ebene sind, und Ablenkebenen aller PPGs in der zweiten Schaltermatrix allesamt parallel zu einer zweiten voreingestellten Ebene sind, wobei die erste voreingestellte Ebene senkrecht zur zweiten voreingestellten Ebene ist; und die Steuervorrichtung so ausgelegt ist, dass sie den Flüssigkristall im Schalter so steuert, dass der Flüssigkristall die erste Bedingung oder die zweite Bedingung erfüllt.

7. Optische Querverbindungsvorrichtung nach Anspruch 1, wobei Schalter von der ersten Spalte bis zur (m - 1)-ten Spalte in der ersten Schaltermatrix und Schalter von der ersten Spalte bis zur (n - 1)-ten Spalte in der zweiten Schaltermatrix jeweils insbesondere zwei PPGs und einen Flüssigkristall umfassen, wobei einer der beiden PPGs zum Empfangen eines Lichtstrahls vom Flüssigkristall und Emittieren des Lichtstrahls zum anderen PPG ausgelegt ist;
Schalter der m-ten Spalte in der ersten Schaltermatrix und Schalter der n-ten Spalte in der zweiten Schaltermatrix jeweils insbesondere einen Flüssigkristall, ein PPG und ein reflektierendes Element (93) umfassen, die der Reihe nach parallel angeordnet sind, wobei das reflektierende Element zum Empfangen eines Lichtstrahls vom PPG und Reflektieren des Lichtstrahls zurück zum PPG ausgelegt ist; und
die optische Querverbindungsvorrichtung ferner ein Lichtleitelement umfasst, wobei das Lichtleitelement ausgelegt ist zum: Durchlassen von Lichtstrahlen von den x Eingangskanälen zur ersten Schaltermatrix; Reflektieren eines Lichtstrahls von der ersten Schaltermatrix zur zweiten Schaltermatrix und Durchlassen eines Lichtstrahls von der zweiten Schaltermatrix zum Ausgangskanal.

8. Optische Querverbindungsvorrichtung nach Anspruch 1, wobei m =1, und n = 1; der Schalter in der ersten Schaltermatrix und der Schalter in der zweiten Schaltermatrix jeweils insbesondere einen Flüssigkristall, ein PPG und ein reflektierendes Element umfassen, die der Reihe nach parallel angeordnet sind, wobei das reflektierende Element zum Empfangen eines Lichtstrahls vom PPG und Reflektieren des Lichtstrahls zurück zum PPG ausgelegt ist; und
die optische Querverbindungsvorrichtung ferner ein Lichtleitelement (1003) umfasst, wobei das Lichtleitelement ausgelegt ist zum: Durchlassen von Lichtstrahlen von den x Eingangskanälen zur ersten Schaltermatrix; Reflektieren eines Lichtstrahls von der ersten Schaltermatrix zur zweiten Schaltermatrix und Durchlassen eines Lichtstrahls von der zweiten Schaltermatrix zum Ausgangskanal.

9. Optische Querverbindungsvorrichtung nach Anspruch 7 oder 8, wobei das Lichtleitelement mit einer Durchlassregion auf einem Lichteinfallsweg des Lichtstrahls vom Eingangskanal versehen ist, mit einer Reflexionsregion auf einem Lichteinfallsweg des Lichtstrahls von der ersten Schaltermatrix versehen ist, und mit einer Durchlassregion auf einem Lichteinfallsweg des Lichtstrahls von der zweiten Schaltermatrix versehen ist.

10. Optische Querverbindungsvorrichtung nach Anspruch 7 oder 8, wobei das Lichtleitelement ein Polarisationsstrahlteiler ist; und
Viertelwellenplättchen zwischen der ersten Schaltermatrix und dem Lichtleitelement bzw. zwischen der zweiten Schaltermatrix und dem Lichtleitelement angeordnet sind.

## Revendications

1. Appareil d'interconnexion optique (30), comprenant :
x ports d'entrée, y ports de sortie, une première matrice de commutation (35), une seconde matrice de commutation (36) et un appareil de commande (39), dans lequel x et y sont des entiers positifs et y est supérieur ou égal à x, dans lequel la première matrice de commutation comprend x × m commutateurs en un agencement matriciel, et x commutateurs de la première colonne de la première matrice de commutation sont respectivement configurés pour recevoir des faisceaux lumineux polarisés depuis les x ports d'entrée ; la seconde matrice de commutation comprend y × n commutateurs en un agencement matriciel, et les y ports de sortie sont respectivement utilisés pour recevoir des faisceaux lumineux depuis les y commutateurs de la dernière colonne de la seconde matrice de commutation ; et chaque port d'entrée des x ports d'entrée correspond à un port de sortie ;
un commutateur de la première matrice de commutation et un commutateur de la seconde matrice de commutation comprennent chacun au moins une grille de polarisation polymère, PPG (352), dans lequel la PPG est configurée pour modifier la lumière polarisée incidente gauche en lumière polarisée droite et émettre la lumière polarisée droite à un angle de déviation prédéfini dans un plan de déviation de la PPG dans une première direction prédéfinie, et modifier la lumière polarisée incidente droite en lumière polarisée gauche et émettre la lumière polarisée gauche à l'angle de déviation prédéfini dans le plan de déviation de la PPG dans une seconde direction prédéfinie, dans lequel la première direction prédéfinie est opposée à la seconde direction prédéfinie ; et
l'appareil de commande est configuré pour commander les commutateurs de la première matrice de commutation et de la seconde matrice de commutation lorsqu'il est déterminé qu'un port de sortie correspondant du j-ième port d'entrée est le k-ième port de sortie, afin qu'un faisceau lumineux émis depuis le j-ième port d'entrée soit incident sur le k-ième port de sortie à un angle prédéfini après être passé successivement par les commutateurs de la j-ième rangée de la première matrice de commutation et les commutateurs de la k-ième rangée de la seconde matrice de commutation, dans lequel j est un entier positif inférieur ou égal à x, et k est un entier positif inférieur ou égal à y.

2. Appareil d'interconnexion optique selon la revendication 1, dans lequel le commutateur de la première matrice de commutation et le commutateur de la seconde matrice de commutation comprennent chacun en outre un cristal liquide (351), et la PPG dans le commutateur est configurée pour recevoir un faisceau lumineux depuis le cristal liquide dans le commutateur, dans lequel
le cristal liquide est configuré pour transmettre une lumière incidente lorsqu'une première condition est satisfaite ; et lorsqu'une seconde condition est satisfaite, modifier la lumière polarisée incidente gauche en lumière polarisée droite et modifier la lumière polarisée incidente droite en lumière polarisée gauche.

3. Appareil d'interconnexion optique selon la revendication 2, dans lequel une rangée de la première matrice de commutation est parallèle à une rangée de la seconde matrice de commutation, une colonne de la première matrice de commutation est parallèle à une colonne de la seconde matrice de commutation, et les plans de déviation de toutes les PPG de la première matrice de commutation et les plans de déviation de toutes les PPG de la seconde matrice de commutation sont tous parallèles aux plans formés par les rangées et les colonnes.

4. Appareil d'interconnexion optique selon la revendication 2, dans lequel une rangée de la première matrice de commutation est parallèle à une rangée de la seconde matrice de commutation, et une colonne de la première matrice de commutation est perpendiculaire à une colonne de la seconde matrice de commutation ; et
les plans de déviation de toutes les PPG de la première matrice de commutation sont tous parallèles à un premier plan prédéfini, et les plans de déviation de toutes les PPG de la seconde matrice de commutation sont tous parallèles à un second plan prédéfini, dans lequel le premier plan prédéfini est perpendiculaire au second plan prédéfini.

5. Appareil d'interconnexion optique selon la revendication 3 ou 4, dans lequel l'appareil d'interconnexion optique comprend en outre un système de lentille (37), et le système de lentille est configuré pour réfracter respectivement x faisceaux lumineux émis depuis les commutateurs de la m-ième colonne de la première matrice de commutation, vers x commutateurs de la première colonne de la seconde matrice de commutation.

6. Appareil d'interconnexion optique selon la revendication 1, dans lequel le commutateur de la première matrice de commutation et le commutateur de la seconde matrice de commutation comprennent chacun en outre deux PPG et un cristal liquide, l'une des deux PPG dans le commutateur est configurée pour recevoir un faisceau lumineux depuis le cristal liquide, et le faisceau lumineux est émis vers l'autre PPG, dans lequel
le cristal liquide est configuré pour transmettre la lumière incidente lorsqu'une première condition est satisfaite ; et lorsqu'une seconde condition est satisfaite, modifier la lumière polarisée incidente gauche en lumière polarisée droite et modifier la lumière polarisée incidente droite en lumière polarisée gauche ;
une rangée de la première matrice de commutation est parallèle à une rangée de la seconde matrice de commutation, et une colonne de la première matrice de commutation est perpendiculaire à une colonne de la seconde matrice de commutation ;
les plans de déviation de toutes les PPG de la première matrice de commutation sont tous parallèles à un premier plan prédéfini, et les plans de déviation de toutes les PPG de la seconde matrice de commutation sont tous parallèles à un second plan prédéfini, dans lequel le premier plan prédéfini est perpendiculaire au second plan prédéfini ; et l'appareil de commande est configuré pour commander le cristal liquide dans le commutateur, afin que le cristal liquide satisfasse à la première condition ou à la seconde condition.

7. Appareil d'interconnexion optique selon la revendication 1, dans lequel les commutateurs de la première colonne à la (m-l)-ième colonne de la première matrice de commutation et les commutateurs de la première colonne à la (n-1)-ième colonne de la seconde matrice de commutation comprennent chacun spécifiquement deux PPG et un cristal liquide, l'une des deux PPG est configurée pour recevoir un faisceau lumineux depuis le cristal liquide et émettre le faisceau lumineux vers l'autre PPG ; les commutateurs de la m-ième colonne de la première matrice de commutation et les commutateurs de la n-ième colonne de la seconde matrice de commutation comprennent chacun spécifiquement un cristal liquide, une PPG et un organe réfléchissant (93) qui sont parallèles en succession, dans lequel l'organe réfléchissant est configuré pour recevoir un faisceau lumineux depuis la PPG et refléter le faisceau lumineux en retour vers la PPG ; et
l'appareil d'interconnexion optique comprend en outre un organe guide de lumière, dans lequel l'organe guide de lumière est configuré pour : transmettre des faisceaux lumineux depuis les x ports d'entrée, à la première matrice de commutation ; réfléchir un faisceau lumineux depuis la première matrice de commutation, vers la seconde matrice de commutation ; et transmettre un faisceau lumineux depuis la seconde matrice de commutation au port de sortie.

8. Appareil d'interconnexion optique selon la revendication 1, dans lequel m = 1 et n = 1 ;
le commutateur de la première matrice de commutation et le commutateur de la seconde matrice de commutation comprennent chacun spécifiquement un cristal liquide, une PPG et un organe réfléchissant qui sont parallèles en succession, dans lequel l'organe réfléchissant est configuré pour recevoir un faisceau lumineux depuis la PPG et refléter le faisceau lumineux en retour vers la PPG ; et
l'appareil d'interconnexion optique comprend en outre un organe guide de lumière (1003), dans lequel l'organe guide de lumière est configuré pour : transmettre des faisceaux lumineux depuis les x ports d'entrée, à la première matrice de commutation ; réfléchir un faisceau lumineux depuis la première matrice de commutation, vers la seconde matrice de commutation ; et transmettre un faisceau lumineux depuis la seconde matrice de commutation au port de sortie.

9. Appareil d'interconnexion optique selon la revendication 7 ou 8, dans lequel l'organe guide de lumière est doté d'une région de transmission sur un trajet optique d'incidence du faisceau lumineux depuis le port d'entrée, est doté d'une région de réflexion sur un trajet optique d'incidence du faisceau lumineux depuis la première matrice de commutation, et est doté d'une région de transmission sur un trajet optique d'incidence du faisceau lumineux depuis la seconde matrice de commutation.

10. Appareil d'interconnexion optique selon la revendication 7 ou 8, dans lequel l'organe guide de lumière est un séparateur de faisceau de polarisation ; et
des lames quart d'onde sont disposées entre la première matrice de commutation et l'organe guide de lumière, et entre la seconde matrice de commutation et l'organe guide de lumière, respectivement.
